# EUROPEAN PATENT APPLICATION

(11) **EP 2 857 956 A1**
(43) Date of publication of application: **08.04.2015**
(21) Application number: 13800070.8
(22) Date of filing: 04.02.2013
(51) Int. Cl.: G06F 3/14, G06F 3/033

(54) **REFLECTIVE DISPLAY AND ELECTRONIC PEN SYSTEM USING SAME**

(30) Priority: 05.06.2012 KR 20120060538
(71) Applicant: Pen Generations, Inc., Seongnam-si, Gyeonggi-do 463-400 (KR)
(72) Inventor: KANG, Yong Hoon, Seoul 140-100 (KR)
(74) Representative: Vossius & Partner
(86) International application number: PCT/KR2013/000880
(87) International publication number: WO 2013/183849

(57) **Abstract**

Disclosed are a reflective display and an electronic pen system using the same. An information pattern for providing position information is formed at pixels configuring the reflective display, and the information pattern includes virtual grid lines and marks.

## Description

### TECHNICAL FIELD

The present invention relates to a reflective display and an electronic pen system, and more particularly, to a reflective display, and an electronic pen system using the same.

### BACKGROUND ART

An electronic pen system, which is a new conceptual pen in which analog and digital are combined, is a pen created so as to store written contents in a memory embedded in the pen when writing characters on a paper, similar to a general pen, transmit the stored contents to a computer in a form of an image file, and manage the image file. A document written by using a general pen may be scanned by a scanner (electronic color separating device) and the scanned document may also be stored in a form of an image file, but a document written by using an electronic pen may be easily managed through a separate program without the necessity of a scanning process. Earlier inventions of an electronic pen can be used only when being connected to a computer. That is, in order to use the electronic pen, there is inconvenience in that a power supply of a computer always needs to be turned on, and further, the electronic pen needs to be used at a place close to a computer. Further, there is a disadvantage in that when contents written by using the electronic pen are stored in a computer, resolution of an image file is low, so that it is difficult to accurately recognize the contents.

Currently, a high-functional electronic pen, which is capable of storing written contents in a memory embedded in the electronic pen and converting the stored contents into digital data anytime when being only connected to a computer, has also been released. A product, in which a liquid crystal display is embedded in an electronic pen itself to enable a user to directly confirm written contents through a screen, and a digital pen, which is capable of wirelessly transmitting data without a connection to a cable, have been developed, and a touch screen method capable of detecting position information of an electronic pen on a display, or a technique capable of detecting a movement trace of an electronic pen by mounting a detecting sensor to an external side of the electronic pen, and the like have been utilized.

However, in the touch screen method or the scheme using the external detecting sensor, as a size of a display is increased, costs of the display are increased, power consumption is rapidly increased, and accuracy in recognizing a trace of the electronic pen is degraded. Accordingly, a technique for finely forming an information pattern including position information about a surface on the surface of a display in a degree, at which it is difficult to determine the information pattern by a human vision, detecting the information pattern by using an electronic pen including an optical sensor, and determining a position on the display, has been commercialized.

A technique for detecting a touch position of an electronic pen by using an infrared sensor mounted in the electronic pen and displaying graphic information at the detected position is disclosed in several patent documents including Korean Patent Application Laid-Open No. 10-2010-0134331. However, Korean Patent Application Laid-Open No. 10-2010-0134331 is for the purpose of displaying graphic information by detecting position information on a transmissive display, so that an infrared light source needs to be separately provided. Further, in order for an electronic pen to recognize a mark on an optical film, the optical film needs to be fabricated of a material capable of reflecting visible rays, and when the optical film is attached to the display, there is a problem in that definition and visibility of an entire image deteriorate, and further, there is a disadvantage in that a mark for providing position information needs to be implemented by using a separate optical film.

### SUMMARY OF THE INVENTION

The present invention has been made in an effort to provide a reflective display, which is capable of providing position information by using pixels configuring a reflective display, so that a separate optical film is not required, displaying graphic information on the reflective display or deleting the graphic information according to position information calculated from a mark, and reducing power consumption by using the reflective display using an external light source, and applicable to various smart learning fields, and an electronic system using the same.

An exemplary embodiment of the present invention provides a reflective display, in which an information pattern for providing position information by using pixels configuring the reflective display is formed, and the information pattern includes virtual grid lines and marks.

The virtual grid lines may be formed to be inclined with respect to a pixel array.

The virtual grid lines may be formed to be inclined at 45 degrees with respect to a pixel array.

The mark may absorb infrared ray incident to the reflective display.

The marks may be arranged on the virtual grid line by adjusting a voltage applied to each pixel.

A gray scale of the pixel may be adjusted according to the applied voltage, and the mark may be adjusted to be darker by four and five scales than the pixel for displaying information on the reflective display.

The gray scale of the mark may be automatically adjusted according to a gray scale of a surrounding pixel.

The mark may be automatically adjusted to be darker by four and five scales than the surrounding pixel.

Another exemplary embodiment of the present invention provides an electronic pen system, including: a reflective display; and an electronic pen configured to recognize an information pattern, and transmit a signal for displaying graphic information on the reflective display, in which an information pattern for providing position information is formed using pixels configuring the reflective display, and the information pattern includes virtual grid lines and a plurality of marks.

The reflective display may be driven by any one method among an electrophoretic method, a micro-electro-mechanical system (MEMS), and an electrowetting method.

The electronic pen may recognize the information pattern and transmit a signal for displaying graphic information on the reflective display or deleting graphic information.

The electronic pen system may further include: a first infrared sensor provided at one side of the electronic pen and configured to recognize an information pattern for displaying the graphic information,; and a second infrared sensor provided at the other side of the electronic pen and configured to recognize an information pattern for deleting the graphic information.

According to the exemplary embodiments of the present invention, the reflective display and the electronic pen system using the same may provide position information by using pixels configuring the reflective display, so that a separate optical film or an additional device, such as a sensor, is not required, display graphic information on the reflective display or delete the graphic information according to position information calculated from a mark, reduce power consumption by using the reflective display using an external light source, and be applicable to various smart learning fields.

### BRIEF DESCRIPTION OF THE DRAWINGS

FIG. 1 is a perspective diagram of a reflective display according to an exemplary embodiment of the present invention.
FIG. 2 is a conceptual diagram illustrating an operation of the reflective display according to the exemplary embodiment of the present invention.
FIG. 3 is a schematic diagram of the reflective display according to the exemplary embodiment of the present invention.
FIG. 4 is a conceptual diagram of the reflective display according to the exemplary embodiment of the present invention.
FIG. 5 is an explanation diagram of an information pattern according to the exemplary embodiment of the present invention.
FIG. 6 is a schematic diagram of the information pattern according to the exemplary embodiment of the present invention.
FIG. 7 is an explanation diagram of an information pattern according to another exemplary embodiment of the present invention.
FIG. 8 is a configuration diagram illustrating an electronic pen system according to an exemplary embodiment of the present invention.
FIG. 9 is a configuration diagram illustrating an electronic pen system according to another exemplary embodiment of the present invention.
FIGS. 10 and 11 are an example of a screen configuration of the electronic pen system according to the exemplary embodiment of the present invention.
FIG. 12 is another example of a screen configuration of the electronic pen system according to the exemplary embodiment of the present invention.
FIG. 13 is another example of a screen configuration of the electronic pen system according to the exemplary embodiment of the present invention.

### DETAILED DESCRIPTION

The present invention may have various modifications and exemplary embodiments and thus specific exemplary embodiments will be illustrated in the drawings and described. However, it is not intended to limit the present invention to the specific exemplary embodiments, and it will be appreciated that the present invention includes all modifications, equivalences, or substitutions included in the spirit and the technical scope of the present invention.

Terms including an ordinal number, such as first and second, are used for describing various constituent elements, but the constituent elements are not limited by the terms. The terms are used only to discriminate one constituent element from another constituent element. For example, without departing from the scope of the invention, a first constituent element may be named as a second constituent element, and similarly a second constituent element may be named as a first constituent element. A term "and/or" includes a combination of multiple relevant described items or any one of the multiple relevant described items.

It should be understood that when one constituent element is referred to as being "coupled to" or "connected to" another constituent element, one constituent element can be directly coupled to or connected to the other constituent element, but intervening elements may also be present. By contrast, when one constituent element is referred to as being "directly coupled to" or "directly connected to" another constituent element, it should be understood that there are no intervening elements.

Terms used in the present application are used only to describe specific exemplary embodiments, and are not intended to limit the present invention. Singular expressions used herein include plurals expressions unless they have definitely opposite meanings in the context. In the present application, it will be appreciated that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

All terms used herein including technical or scientific terms have the same meanings as meanings which are generally understood by those skilled in the art unless they are differently defined. Terms defined in a generally used dictionary shall be construed that they have meanings matching those in the context of a related art, and shall not be construed in ideal or excessively formal meanings unless they are clearly defined in the present application.

Hereinafter, exemplary embodiments according to the present invention will be described in detail with reference to the accompanying drawings, and the same or corresponding constituent elements are denoted by the same reference numerals regardless of a sign of the drawing, and repeated description thereof will be omitted.

In the present invention, a reflective display is an electronic device capable of serving as a sheet of paper, and means all of the display devices with which a user can freely write and delete contents on a display by using a device, such as a digital pen and an electronic pen.

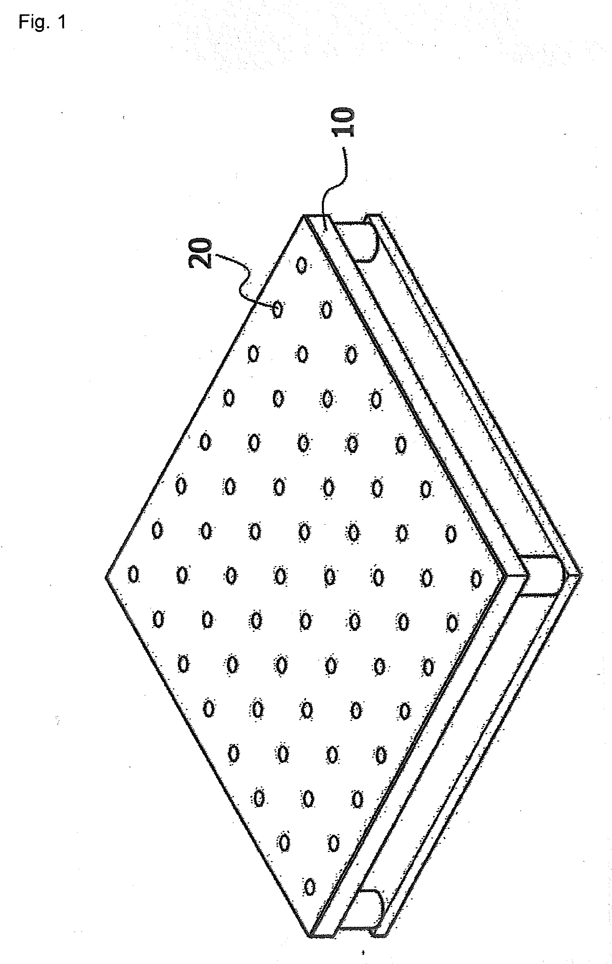

FIG. 1 is a perspective diagram of a reflective display according to an exemplary embodiment of the present invention.

Referring to FIG. 1, an information pattern for providing position information by using pixels configuring a reflective display 10 according to an exemplary embodiment of the present invention is formed, and the information pattern may be configured with virtual grid lines 22 and marks 21.

First, the reflective display may display information by using an external light source without a separate light source. A display may be divided according to a method of utilizing a light source. A transmissive display adopts a method in which light emitted from a backlight passes through a top surface, so that information is displayed to the outside, while a reflective display adopts a method in which an external light source is reflected from a surface of the display in a front direction, so that information is displayed to the outside without a backlight unit. The reflective display may be driven by any one method of an electrophoretic method, a micro-electro-mechanical system (MEMS), and an electrowetting method. In the electrophoretic method, black and white materials inside spherical particles move according to application of electricity to express black and white images. The electrowetting method may reflect light and express colors by using a principle in that red, blue, and green dye oil of each pixel is spread or collected. The MEMS adopts a principle in that sun light is reflected by a reflective film to express various colors.

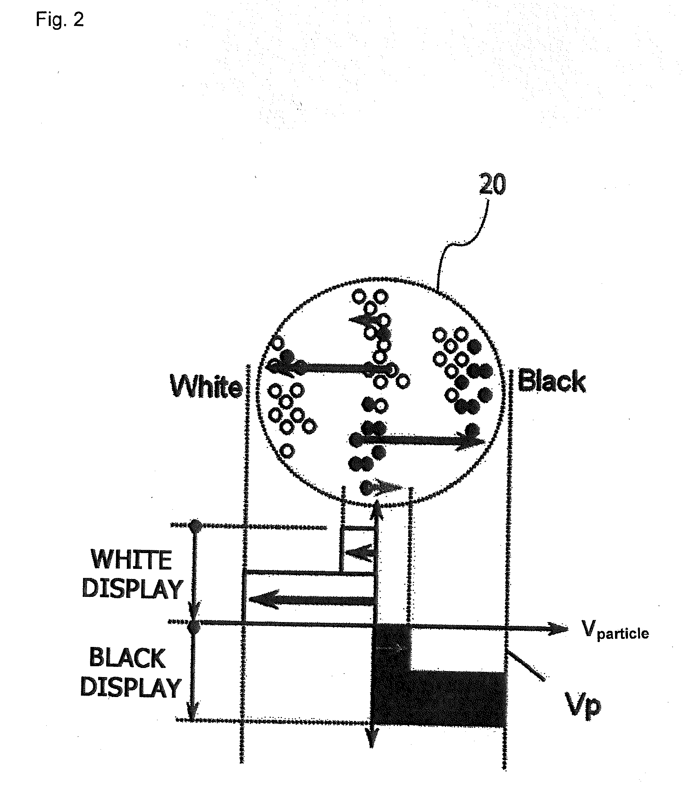

FIG. 2 is a conceptual diagram illustrating an operation of the reflective display according to the exemplary embodiment of the present invention. A driving method of the reflective display may be generally divided into three methods as described above, but a common operational principle is to use a combination of each pixel 20 expressed with black and white when a voltage is applied and is not applied. Referring to FIG. 2, when it is assumed that Vp is an application voltage, and a voltage equal to or greater than an application voltage is applied, negatively charged ink microparticles move to a surface of the pixel, so that the pixel 20 is displayed with a black color, and when a voltage equal to or smaller than the application voltage is applied, ink microparticles move downward, so that the pixel 20 is displayed with a white color, and thus a character or an image is displayed through the aforementioned method. Further, each pixel 20 may be expressed with a plurality of achromatic colors existing between a black color and a white color according to a size of a voltage applied to the pixel 20, and the plurality of achromatic colors is referred to as a gray scale, and the gray scale may be divided into an eight step gray scale, a 10 step gray scale, a 16 step gray scale, ..., an n step gray scale, and the like according to the number of achromatic colors existing between a black color and a white color.

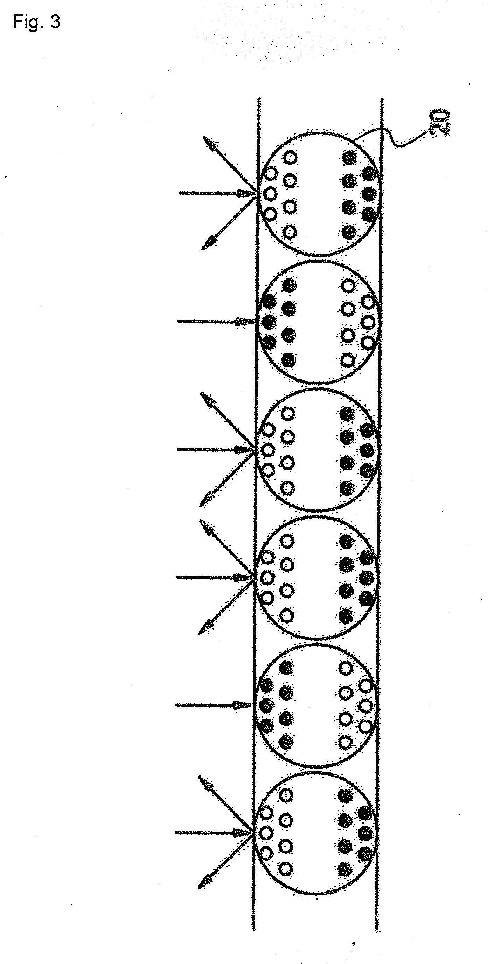

FIG. 3 is a schematic diagram of the reflective display according to the exemplary embodiment of the present invention. Referring to FIG. 3, the respective pixels 20 may be indicated by a plurality of gray scales by varying voltages applied to the serially arranged pixels 20. Each pixel 20 serves to reflect or absorb an external light source, and a pixel 20 close to white among the gray scales serves to reflect the external light source and a pixel 20 close to black serves to absorb the external light source, thereby displaying a character or an image on the display.

The mark 21 is formed to have a color closer to black than the pixel 20 in terms of the gray scales in order to display information, such as a character or an image, on the reflective display. The mark 21 adjusts the gray scale so as to absorb infrared rays at an appropriate level. An infrared region has a wavelength of approximately 700 to 10,000 nm, and may be divided into a near-infrared region, a mid-infrared region, and a far-infrared region, and the mark 21 may be formed to absorb a near-infrared region having a wavelength of approximately 750 nm to 1,300 nm.

A voltage may be adjusted so that the mark 21 is displayed at a step, which is darker by four and five steps than the gray scale of the pixel 20 for displaying information on the reflective display, thereby enabling an electronic pen 30 to recognize the mark 21. Otherwise, a voltage may be adjusted so that the pixel 20 for displaying information on the reflective display is displayed at a step, which is brighter by four and five steps than the gray scale of the mark 21, thereby enabling the electronic pen 30 to recognize the mark 21. In order for the electronic pen 30 to recognize the mark, the gray scales with the four and five steps need to be maintained between the mark 21 and the surrounding pixels, which is aimed to be implemented by adjusting a voltage of the mark 21 or the surrounding pixel 20 in the exemplary embodiment of the present invention. However, a difference between the gray scales within a mark recognition limit of the electronic pen 30 does not depart from the objective scope of the present invention, and a change in a degree of difference in the gray scale for recognizing the mark by the electronic pen 30 is included in the scope of the present invention.

Further, the gray scale of the mark 21 may be automatically adjusted according to a gray scale of the surrounding pixel 20. In order for an infrared sensor of the electronic pen 30 to recognize the mark 21, a background for reflecting an external light source is demanded, and in a general case, a white background of the reflective display serves as the background for reflecting the external light source. However, the pixel 20 for displaying a character or an image on the reflective display absorbs the external light source, so that there may be a problem in that the infrared sensor of the electronic pen 30 cannot recognize the mark 21 or equally recognizes the mark 21 and the pixel 20, which displays a character or an image.

Accordingly, the infrared sensor of the electronic pen 30 may recognize the mark 21 by making the mark 21 be darker by four and five scales than the surrounding pixel 20 or the pixel 20 displaying a character or an image. Further, when the background of the reflective display is configured by a bright color, the gray scale of the mark 21 is formed to be bright with a gray system, thereby improving overall brightness of the reflective display. The gray scale of each pixel of the reflective display may be controlled by an embedded micro control unit (MCU).

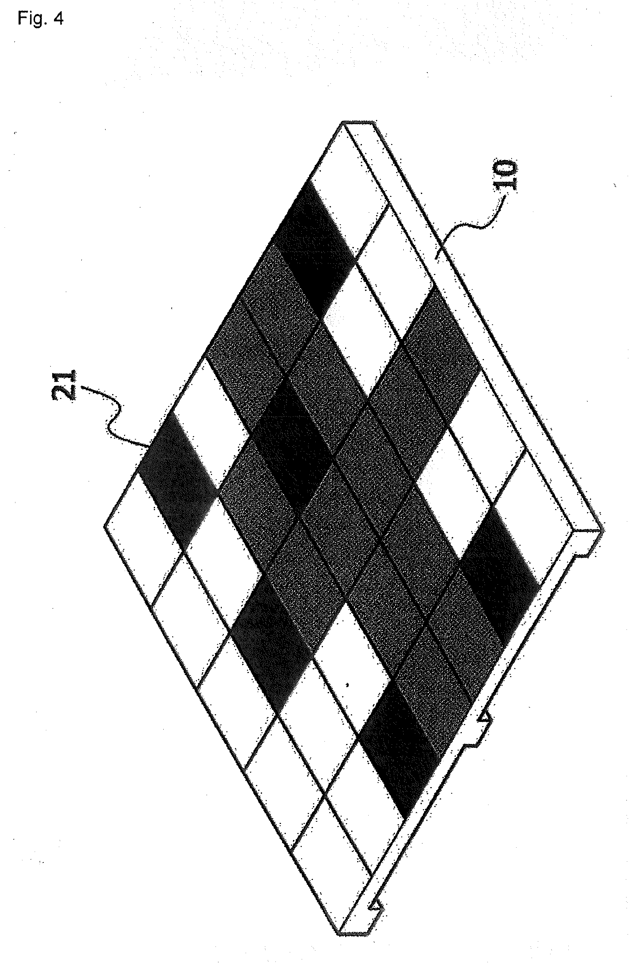

FIG. 4 is a conceptual diagram of the reflective display according to the exemplary embodiment of the present invention. Referring to FIG. 4, it can be seen that the marks 21 for providing position information by using the pixels 20 configuring the reflective display are formed on a surface of the reflective display 10. Each pixel may serve to reflect/absorb light according to the gray scale, or serve as the mark 21 for providing position information. In FIG. 4, a white pixel reflects light and a gray pixel absorbs light to serve to display graphic information on the reflective display. Black pixels, which are the marks 21, are arranged so as to provide position information while having a predetermined rule based on virtual grid lines 22, and cannot be identified with naked eyes.

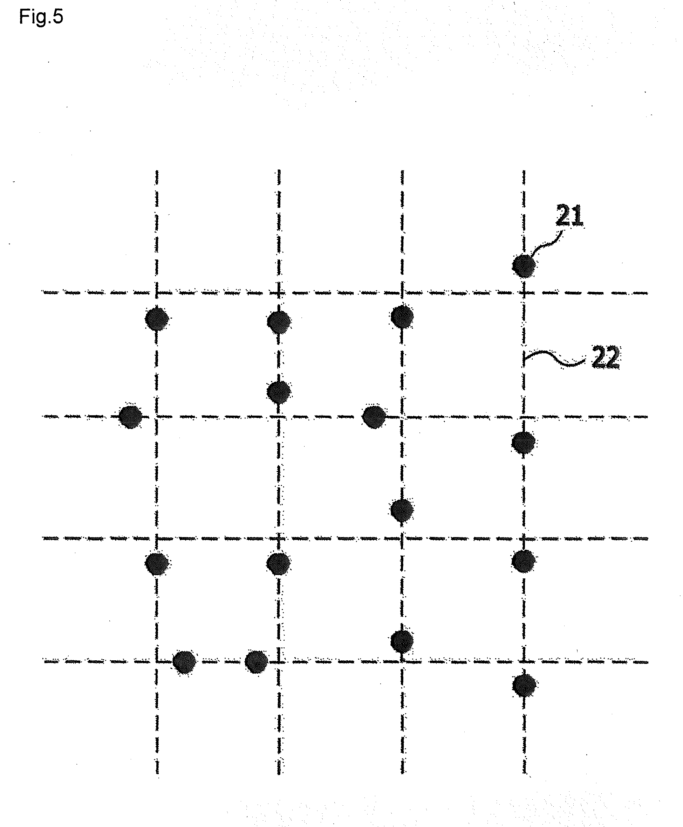

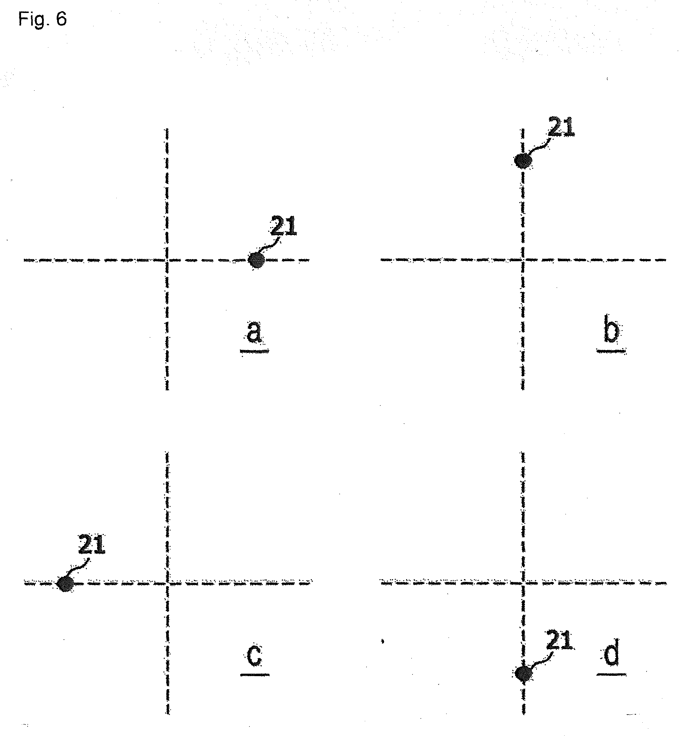

FIG. 5 is an explanation diagram of an information pattern according to the exemplary embodiment of the present invention, and FIG. 6 is a schematic diagram of the information pattern according to the exemplary embodiment of the present invention.

Referring to FIG. 5, an information pattern for providing position information by using reflected light is formed on the reflective display 10. The information pattern includes the virtual grid lines 22 and the plurality of marks 21, and each mark 21 may be formed at a predetermined interval based on a crossing point of the virtual grid lines 22. Each mark 21 may provide position information by a mark value determined according to a position formed based on the crossing point of the virtual grid lines 22. The marks 21 may be formed at a predetermined interval based on the crossing points of the virtual grid lines 22, and have mark values, respectively, and the mark value may be configured by a combination of two or more different numbers. The mark 21 has various shapes, such as a circle, an ellipse, a polygon, and a straight line, and one type of mark 21 may be used in one reflective display 10.

For example, referring to FIG. 6, the mark 21 may be located at four positions according to a relationship with the crossing point of the virtual grid lines 22, and when the mark 21 is located at a right side of the crossing point, such as "a", the mark value may be indicated by "1", when the mark 21 is located at an upper side of the crossing point, such as "b", the mark value may be indicated by "2", when the mark 21 is located at a left side of the crossing point, such as "c", the mark value may be indicated by "3", and when the mark 21 is located at a lower side of the crossing point, such as "d", the mark value may be indicated by "4", thereby providing position information according to a position of the mark 21 based on the crossing point of the virtual grid lines 22.

The mark 21 may also be formed in a diagonal direction, not on the virtual grid lines 22, and the plurality of marks 21 may be formed at one crossing point of one virtual grid lines 22, thereby providing position information. In this case, each mark value may be divided into an x-coordinate and a y-coordinate to be expressed by predetermined coordinates, and position information may be provided based on the mark value expressed with coordinates.

The virtual grid lines 22 may be horizontally and vertically formed at a predetermined interval. A distance between the grid lines 22 may be formed with 250 to 300 µm or more, and the mark 21 may be formed at a point distant 1/4 or 1/8 from the crossing point of the virtual grid lines 22. Otherwise, two or more marks 21 may be associatively formed based on the crossing point of the virtual grid lines 22.

For example, when an infrared detecting sensor of the electronic pen 30 recognizes 36 marks 21, which include six marks in a horizontal direction and a vertical direction each, on the grid lines 22 having a size of 6 × 6, the electronic pen 30 may calculate position information according to each mark value, and recognize an absolute position on the reflective display 10 by using the calculated position information.

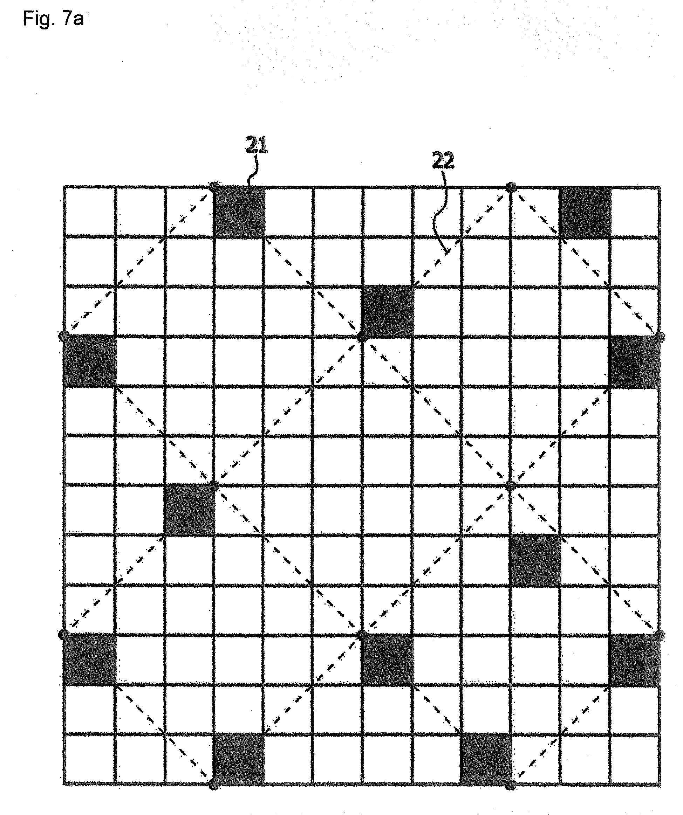

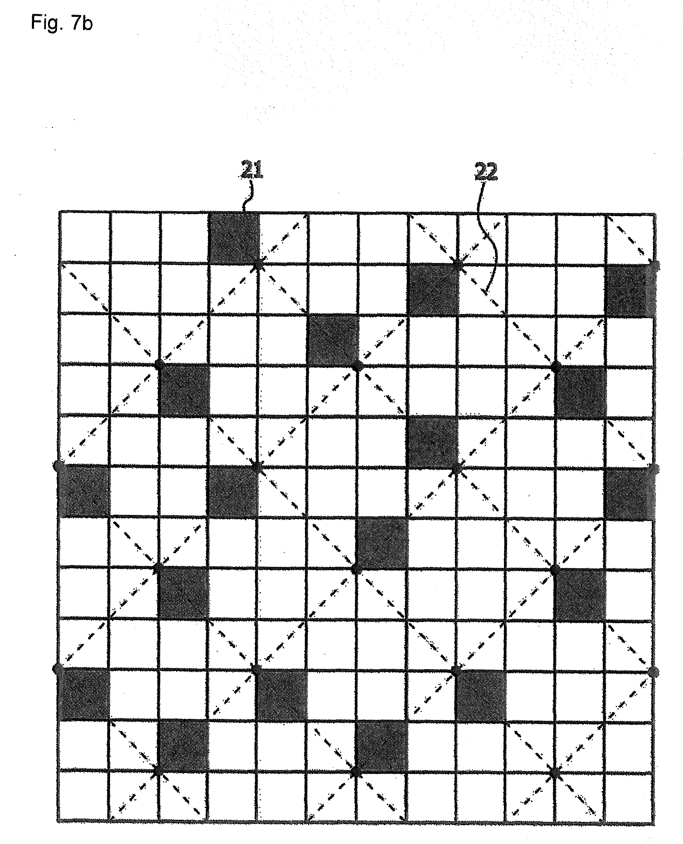

FIGS. 7A and 7B are explanation diagrams of an information pattern according to another exemplary embodiment of the present invention. Referring to FIGS. 7A and 7B, it can be seen that crossing points of virtual grid lines 22 of an information pattern implemented according to another exemplary embodiment of the present invention are formed at vertexes of the pixels while being inclined at 45 degrees with respect to a pixel array, and marks 21 are formed on the virtual grid lines 22. As described above, the virtual grid lines 22 may be formed at an interval of 250 to 300 µm, and when a size of the pixel 20 is 100 to 150 µm, the marks 21 may overlap based on the crossing point. Accordingly, in this case, when the virtual grid lines 22 are formed to be inclined at a predetermined angle with respect to a direction, in which the pixels 20 are arranged, that is, the pixel array, it is possible to arrange the marks 21 so that the marks 21 do not overlap based on the crossing points, and a pattern may also be implemented in a reflective display formed of larger pixels. An interval formed by the grid lines may be different according to a size of the pixel, and it can be seen that in FIG. 7B, a size of the pixel is large, so that the grid lines are formed at a small interval, compared to FIG. 7A.

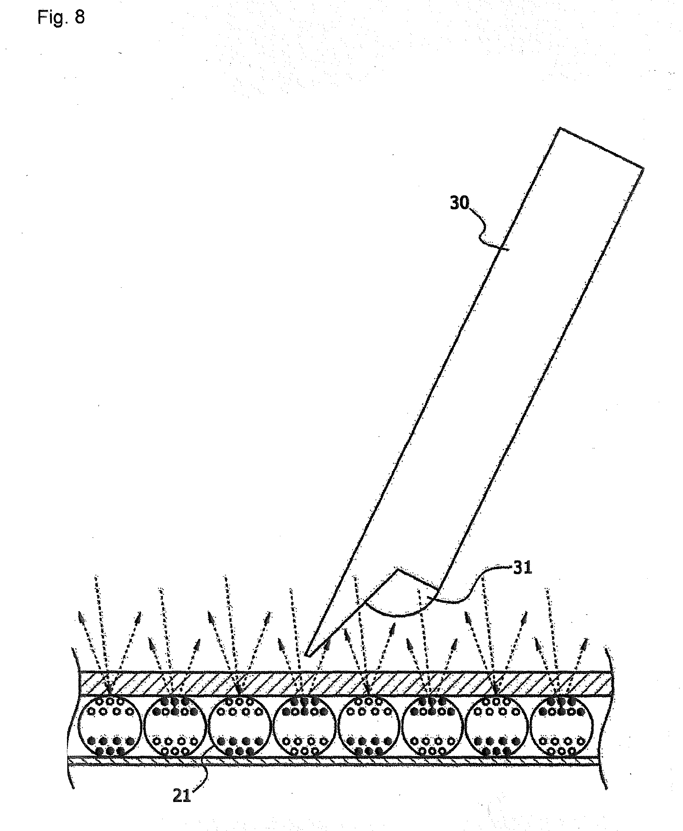

FIG. 8 is a configuration diagram illustrating an electronic pen system according to an exemplary embodiment of the present invention. The electronic pen system according to another exemplary embodiment of the present invention includes a reflective display 10, and an electronic pen 30 for recognizing an information pattern and transmitting a signal for displaying graphic information on the reflective display 10, and the information pattern for providing position information may be formed at pixels 20 configuring the reflective display, and the information pattern may include virtual grid lines 22 and a plurality of marks 21.

Referring to FIG. 8, the electronic pen 30 may have a form of a general pen, and an infrared detecting sensor may be provided at a part at which a pen point is formed. The infrared detecting sensor may recognize the mark 21 formed on the reflective display 10. The electronic pen 30 may calculate a mark value according to the mark 21 recognized by the infrared detecting sensor, and calculate a position within an optical film. For example, when an infrared detecting sensor of the electronic pen 30 recognizes 36 marks 21, which include each six marks in a horizontal direction and a vertical direction each, on the grid lines 22 having a size of 6 × 6, the electronic pen 30 may calculate position information according to each mark value, and recognize an absolute position on the reflective display 10.

The electronic pen 30 may transmit the calculated position information to the reflective display 10 by a wired or wireless communication method, and the reflective display 10 may display the graphic information to the outside according to a trace of the position information transmitted by the electronic pen 30. The electronic pen 30 and the reflective display 10 may be connected by wire to transmit data by using a serial communication method, or perform data communication by using any one near field wireless communication method among Bluetooth, infrared communication, RF communication, and ZigBee communication.

The MCU is embedded in the electronic pen 30, so that the electronic pen 30 may analyze the position information according to a mark value, or when the electronic pen 30 recognizes a mark value and transmits the recognized mark value to the reflective display 10, the reflective display 10 may be implemented so as to calculate the position information according to the mark value and display graphic information according to the calculated position information to the outside. The electronic pen 30 may transmit data for a mark value to an external computer or a processor of a smart phone and the like, and the external processor may analyze position information according to a mark value and transmit the analyzed position information to the electronic pen 30 or the reflective display 10.

A light source (not illustrated) capable of emitting infrared ray or visible ray may be included in the electronic pen 30. The electronic pen 30 may recognize the marks 21 formed on the reflective display 10 by using infrared ray included in natural light, a fluorescent lamp, and the like, but the reflective display 10 may display information by using light emitted from the electronic pen 30 itself in a dark place where infrared ray is not sufficiently provided to recognize the mark 21, and the electronic pen 30 may recognize the mark 21.

A function capable of deleting graphic information displayed on the reflective display by using the electronic pen 30 may be included in the electronic pen 30. The MCU of the electronic pen 30 may simultaneously transmit a recording/deleting flag while transmitting the mark value or the position information on the mark 21 recognized by the infrared detecting sensor according to an external input. This may be implemented by adding a 1 bit signal, such as 0/1, to the mark value or the position information expressed by a digital signal, and when the receive bit signal is 0, the MCU of the reflective display 10 may display graphic information on the corresponding position information, or when the receive bit signal is 1, the MCU of the reflective display 10 may delete the graphic information displayed on the corresponding position information.

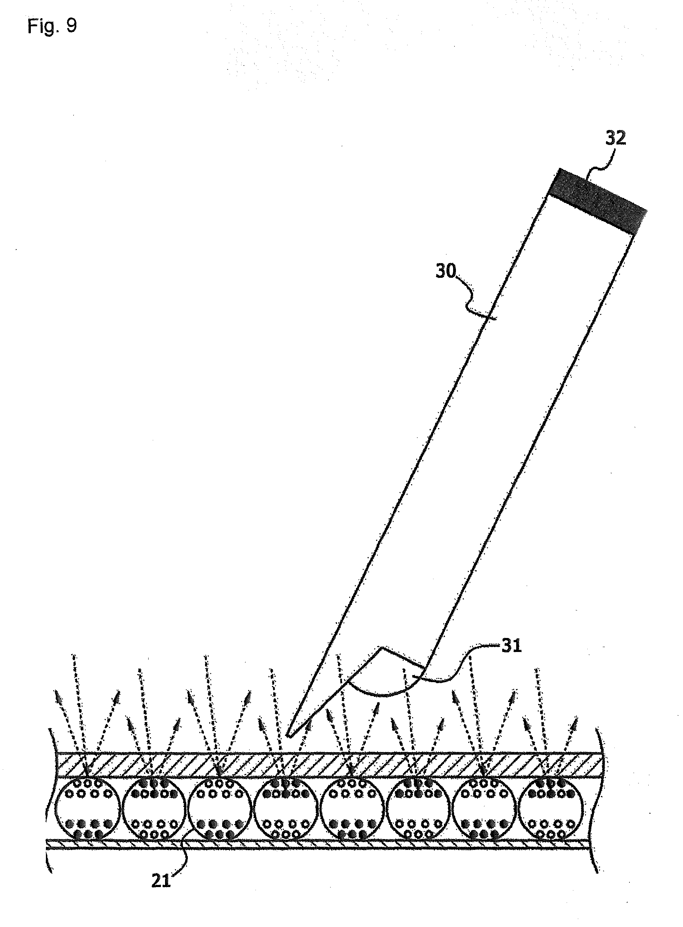

FIG. 9 is a configuration diagram illustrating an electronic pen system according to another exemplary embodiment of the present invention. The electronic pen system according to another exemplary embodiment of the present invention includes a reflective display 10, and an electronic pen 30 for recognizing an information pattern and transmitting a signal for displaying graphic information on the reflective display 10, and an information pattern for providing position information is formed at pixels configuring the reflective display, and a first infrared sensor for recognizing an information pattern for displaying graphic information is provided at one side of the electronic pen 30, and a second infrared sensor for recognizing an information pattern for deleting graphic information is provided at the other side of the electronic pen 30.

Referring to FIG. 9, the first infrared sensor 31 may be provided at one side of the electronic pen 30 and the second infrared sensor 32 may be provided at the other side of the electronic pen 30, and the first infrared sensor 31 may be provided at a distal end of a part, at which a pen point is formed, and the second infrared sensor 32 may be provided at a distal end part opposite to the pen point. The electronic pen 30 may be implemented so as to transmit a mark value or position information detected by the first infrared sensor 31 together with a bit signal of 0 to display graphic information on the corresponding position information, and a mark value or position information detected by the second infrared sensor 32 together with a bit signal of 1 to delete graphic information displayed on the corresponding position information.

Other devices for communication means and devices, such as a microphone and a speaker, capable of various functions may be embedded inside the electronic pen 30, and operations thereof may be controlled by the MCU embedded in the electronic pen 30. Otherwise, an ink is included at a pen point part of the electronic pen 30, so that the electronic pen 30 may perform a function of a general pen, and may be used for writing on a notebook, a board, an electronic board, and the like using a reflective display in which an information pattern is formed.

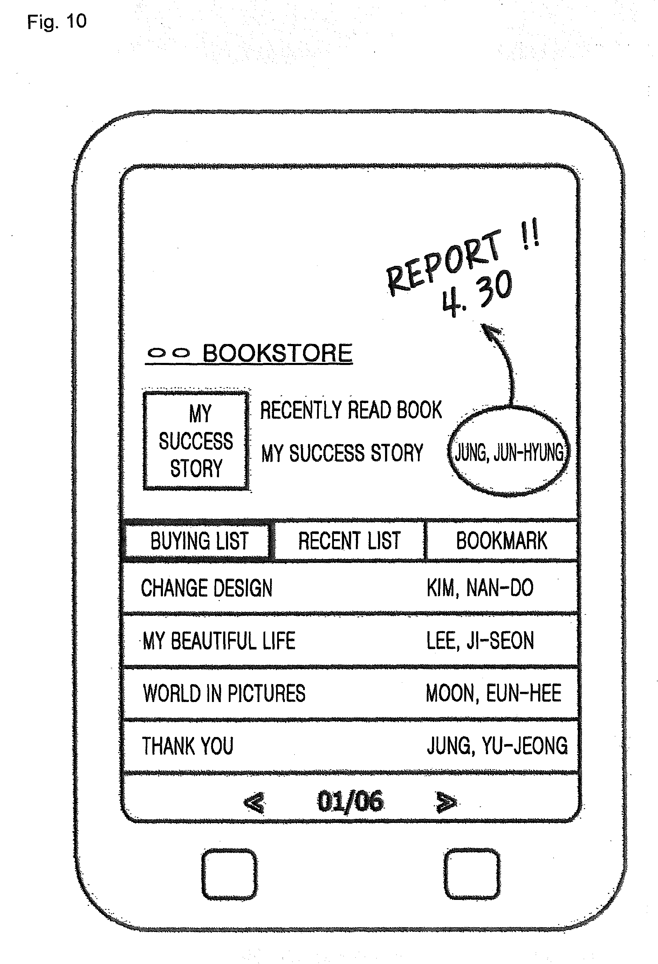

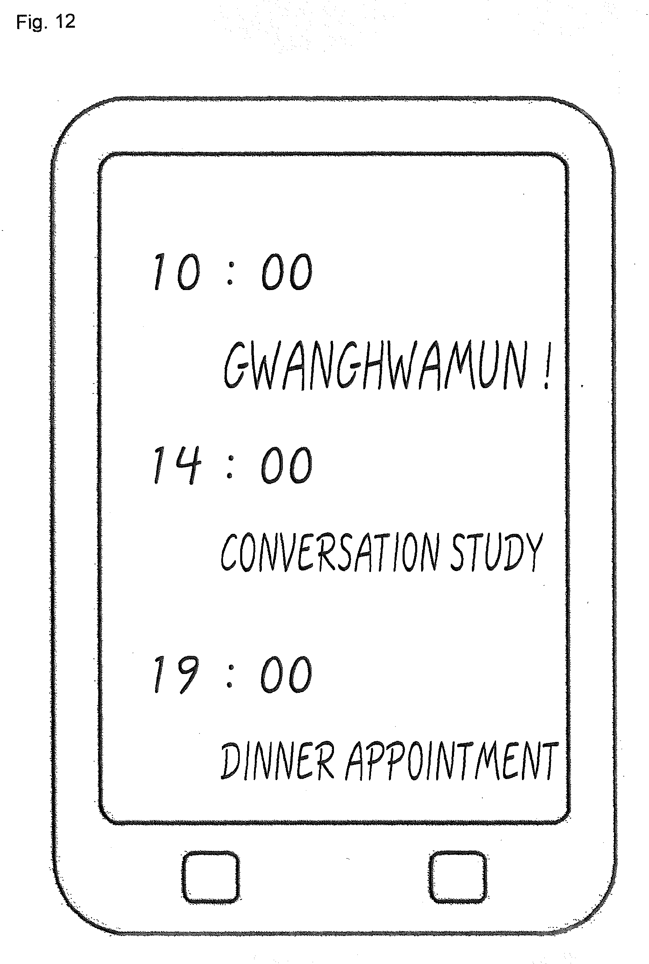

FIGS. 10 and 12 are screen configuration diagrams of the electronic pen system according to the exemplary embodiment of the present invention.

Referring to FIG. 10, the electronic pen system according to the exemplary embodiment of the present invention may be linked with an e-book system including the reflective display 10 to be utilized by a method of putting a memo to information displayed on a screen or underlining the information. The electronic pen system may also be utilized in a digital textbook, an electronic board, and a terminal device, such as a smart phone, implementable by the reflective display, as well as the e-book. Further, the electronic pen system may be implemented so that only information displayed with the electronic pen 30 may be separately extracted and stored by adding a database and a communication device to the listed devices implemented by the reflective display, and the information may be transmitted to other terminal devices and the like by using a communication device.

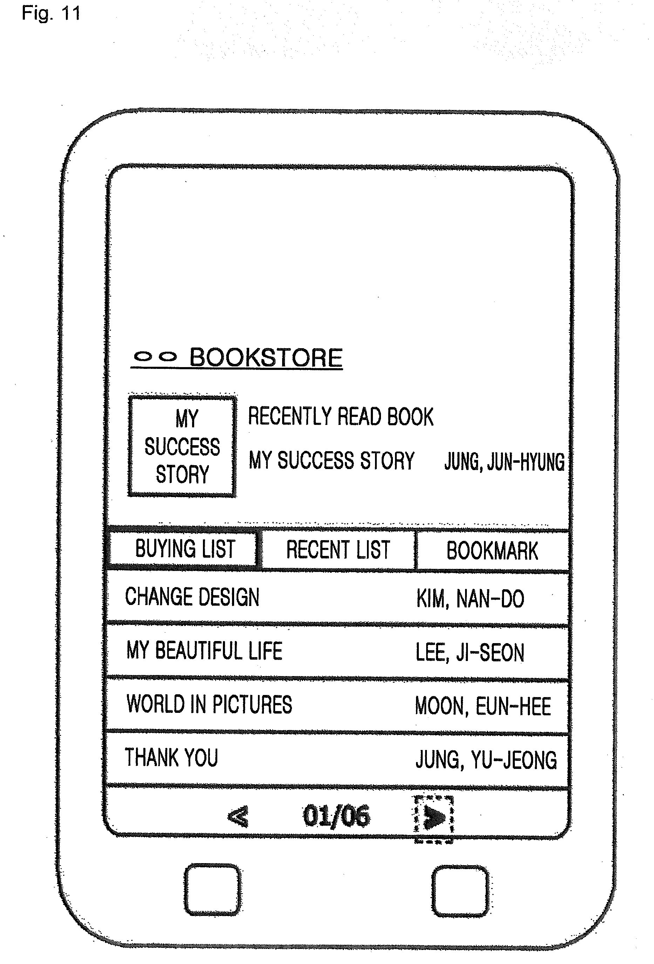

Referring to FIG. 11, the electronic pen system according to the exemplary embodiment of the present invention may be implemented so that the electronic pen system is linked with an e-book system including the reflective display, so that a command is input by a touch screen method according to a contact point of the electronic pen 30. The electronic pen 30 recognizes the mark 21 formed on the reflective display, so that when position information calculated according to a mark value is converted into an electric signal, the MCU embedded in the reflective display controls the electronic pen 30 so that the electronic pen 30 performs a command positioned at a contact point of the electronic pen 30. According to the aforementioned operation principle, an e-book may perform an operation, such as turning pages or marking a bookmark. Further, other terminal devices implemented by the reflective display may perform an operation of playing music or video and the like by using the electronic pen 30.

FIG. 12 is a configuration diagram of a screen of the electronic pen system according to another exemplary embodiment of the present invention. Referring to FIG. 12, the reflective display 10 of the electronic pen system may perform a function of a notebook, a diary, and the like. In FIG. 12, only characters recorded by using the electronic pen 30 are displayed on an empty screen, but horizontal lines or vertical lines may be provided so as to perform a writing function, like a general notebook.

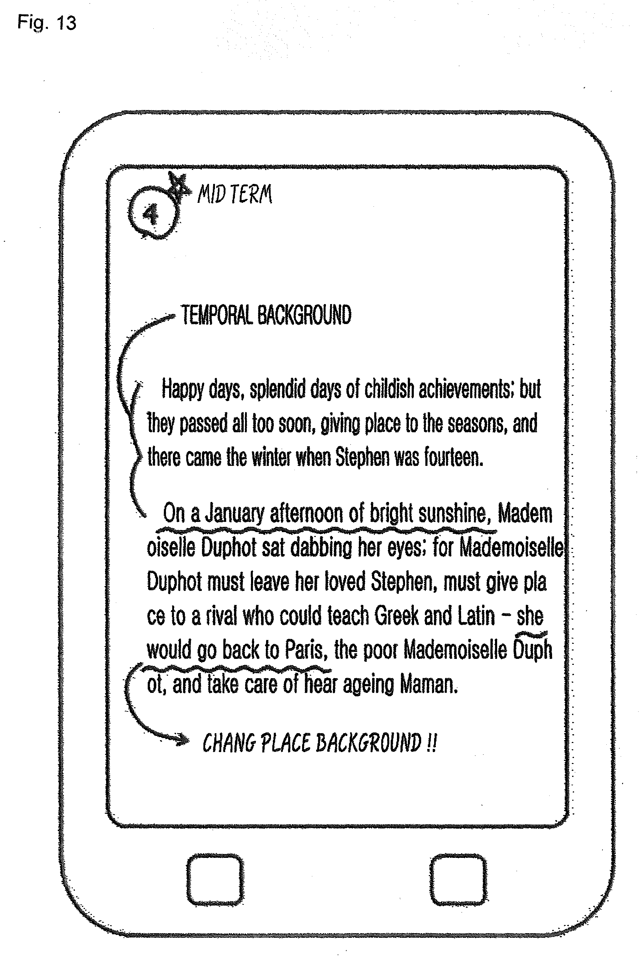

FIG. 13 is a configuration diagram of a screen of the electronic pen system according to another exemplary embodiment of the present invention. Referring to FIG. 13, the electronic pen system according to another exemplary embodiment of the present invention may be linked with an e-book system including the reflective display 10 to be utilized by a method of putting a memo to information displayed on a screen or underlining the information. The electronic pen system may also be utilized in a digital textbook, an electronic board, and a terminal device, such as a smart phone, implementable by the reflective display, as well as the e-book. Further, the electronic pen system may be implemented so that only information displayed with the electronic pen 30 may be separately extracted and stored by adding a database and a communication device to the listed devices implemented by the reflective display, and the information may be transmitted to other terminal devices and the like by using a communication device.

A term "... unit" used in the present exemplary embodiment means a software element or a hardware element, such as a field programmable gate array (FPGA) or application specific integrated circuit (ASIC), and the "... unit" performs specific functions. However, the term "... unit" is not limited to software or hardware. The term "... unit" may be configured to be present in an addressable storage medium, or to reproduce one or more processors. Accordingly, for example, the term "... unit" includes elements, such as software elements, object-oriented software elements, class elements, and task elements, processes, functions, attributes, procedures, sub-routines, segments of a program code, drivers, firmware, a micro code, a circuit, data, a database, data structures, tables, arrays, and variables. The elements and the functions provided by the "... units" may be combined with the smaller number of elements and "... units", or be further separated into additional elements and "... units". In addition, the elements and "... units" may be implemented so as to reproduce one or more CPUs within a device or a security multimedia card.

Although the present invention has been described with reference to the exemplary embodiments, those skilled in the art may understand that the present invention may be variously modified and changed within a scope without departing from the spirit and the area of the present invention described in the accompanying claims.

## Claims

1. A reflective display device, wherein an information pattern for providing position information by using pixels configuring the reflective display is formed, and
the information pattern includes virtual grid lines and marks.

2. The reflective display of claim 1, wherein the virtual grid lines are formed to be inclined with respect to a pixel array.

3. The reflective display of claim 1, wherein the virtual grid lines are formed to be inclined at 45 degrees with respect to a pixel array.

4. The reflective display of claim 1, wherein the mark is a pixel that absorbs infrared ray incident to the reflective display.

5. The reflective display of claim 1, wherein the marks are arranged on the virtual grid line by adjusting a voltage applied to each pixel.

6. The reflective display of claim 5, wherein a gray scale of the pixel is adjusted according to the applied voltage, and the mark is adjusted to be darker by four and five scales than the pixel for displaying information on the reflective display.

7. The reflective display of claim 1, wherein the gray scale of the mark is automatically adjusted according to a gray scale of a surrounding pixel.

8. The reflective display of claim 7, wherein the mark is automatically adjusted to be darker by four and five scales than the surrounding pixel.

9. An electronic pen system, comprising:
a reflective display; and
an electronic pen configured to recognize the information pattern, and transmit a signal for displaying graphic information on the reflective display,
wherein an information pattern for providing position information is formed at pixels configuring the reflective display, and the information pattern includes virtual grid lines and a plurality of marks.

10. The electronic pen system of claim 9, wherein the reflective display is driven by any one method among an electrophoretic method, a micro-electro-mechanical system (MEMS), and an electrowetting method.

11. The electronic pen system of claim 9, wherein the electronic pen recognizes the information pattern and transmits a signal for displaying graphic information on the reflective display or deleting graphic information.

12. The electronic pen system of claim 9, further comprising:
a first infrared sensor provided at one side of the electronic pen and configured to recognize an information pattern for displaying the graphic information; and
a second infrared sensor provided at the other side of the electronic pen and configured to recognize an information pattern for deleting the graphic information.
